# EUROPÄISCHE PATENTSCHRIFT

(11) **EP 3 064 330 B1**
(45) Veröffentlichungstag und Bekanntmachung des Hinweises auf die Patenterteilung: **29.11.2017**
(21) Anmeldenummer: 16157603.8
(22) Anmeldetag: 26.02.2016
(51) Int. Cl.: B27D 5/00, B23Q 35/28

(54) **VERSTELLBARE TASTEINRICHTUNG**
ADJUSTABLE FEELER DEVICE
DISPOSITIF DE PALPAGE RÉGLABLE

(30) Priorität: 02.03.2015 DE 102015203656
(43) Veröffentlichungstag der Anmeldung: 07.09.2016
(73) Patentinhaber: HOMAG GmbH, 72296 Schopfloch (DE)
(72) Erfinder: Sturm, Gotthilf, 72293 Glatten (DE)
(74) Vertreter: Hoffmann Eitle

(56) Entgegenhaltungen:
- EP-A1- 2 539 096
- CH-A- 366 962

## Beschreibung

### Technisches Gebiet

Die vorliegende Erfindung betrifft eine Tasteinrichtung gemäß dem Oberbegriff des Anspruchs 1. Eine solche Tasteinrichtung ist aus der CH 366 962 A bekannt.

### Stand der Technik

Plattenförmige Werkstücke aus Holz oder Holzwerkstoffen werden u.a. in der Möbel- und Bauelementeindustrie verarbeitet. Z.B. wird ein Kantenmaterial an den Schmalseiten solcher Werkstücke angebracht, und dieses Kantenmaterial wird in einem nachfolgenden Arbeitsgang nachbearbeitet. Toleranzen des Kantenmaterials, aufspannungsbedingte Lagetoleranzen des Werkstücks oder ein unterschiedliches Verhalten je nach Werkstück- bzw. Bearbeitungsposition erfordern bei der Nachbearbeitung einen Ausgleich durch eine Tasteinrichtung, mit der ein Werkzeug, insbesondere ein Fräser, relativ zum Werkstück geführt wird.

Beispielsweise ist aus der EP 2 539 096 A1 eine Vorrichtung zum Bearbeiten der Schmalflächen von bevorzugt plattenförmigen Werkstücken bekannt. In einer Ausführungsform dieser Vorrichtung werden eine im Durchmesser verstellbare Tastrolle und ein Werkzeug bereitgestellt, wobei ein am Außenumfang konisches Element konzentrisch an der Tastrolle vorgesehen ist und der Tastring innen eine konische Fläche aufweist. Durch Anpressen des konischen Elementes gegen die konische Fläche des Rings kann der Ring gedehnt und sein Durchmesser eingestellt werden.

Als weiteres Dokument ist die CH 366 962 A bekannt, die in einer Ausführungsform eine Tastrolle beschreibt, bei der der Außenring eines Kugellagers mit einer Schulter versehen ist, und entgegengesetzt zur Schulter auf dem Außenring eine Ringmutter aufgeschraubt ist, die durch eine Sicherungsmutter gesichert ist. Zwischen der Schulter des Außenrings und der Ringmutter ist ein elastischer Ring angeordnet, dessen Außendurchmesser dadurch verändert werden kann, dass die Ringmutter mehr oder weniger aufgeschraubt ist. Hierdurch kann der Außendurchmesser der Tastrolle dem Durchmesser des Fräsers angepasst werden.

### Gegenstand der Erfindung

Vor dem Hintergrund des Stands der Technik ist es ein Ziel der vorliegenden Erfindung, eine präzisere Verstellbarkeit einer Tasteinrichtung zu ermöglichen und größere Verstellwege bei gleichbleibender Funktionalität zu gewährleisten.

Anspruch 1 stellt eine Tasteinrichtung bereit, mit der das zuvor genannte Ziel erreicht wird. Weitere bevorzugte Ausführungsformen sind in den abhängigen Ansprüchen aufgeführt. Einzelmerkmale der abhängigen Ansprüche wie auch nachfolgend genannter Modifikationen können jeweils einzeln miteinander kombiniert werden, um neue Ausführungsformen auszubilden.

Die vorliegende Erfindung stellt eine Tasteinrichtung für eine Bearbeitungsmaschine bereit, wobei eine solche Bearbeitungsmaschine zur Bearbeitung von bevorzugt plattenförmigen Werkstücken, die bevorzugt zumindest abschnittsweise aus Holz, Holzwerkstoffen, Kunststoff oder dergleichen bestehen, verwendet wird. Die Tasteinrichtung umfasst ein erstes Stützelement, das eine konische Außenfläche aufweist, an welcher Außenfläche zumindest abschnittsweise ein dehnbarer Tastring anliegt. Ferner umfasst die Tasteinrichtung ein zweites Stützelement mit einer konischen Außenfläche, wobei das zweite Stützelement benachbart zum ersten Stützelement derart angeordnet ist, dass die konische Außenfläche des zweiten Stützelements und die konische Außenfläche des ersten Stützelements eine Nut ausbilden, in welcher Nut der Tastring aufgenommen wird. Die Tasteinrichtung zeichnet sich auch dadurch aus, dass das erste Stützelement und das zweite Stützelement relativ zueinander bewegbar sind.

Auf diese Weise wird eine kostengünstige Tasteinrichtung bereitgestellt, mit der der Tastring zwischen dem ersten Stützelement und dem zweiten Stützelement zentriert wird. Eine Bewegung eines der Stützelemente führt dazu, dass die konische Außenfläche dieses Stützelements in gleichem Abstand zur Mittenachse bleibt. Durch die Relativbewegung zwischen den Stützelementen verändert sich ferner der Außenumfang des dehnbaren Tastrings.

Durch das Verstellen des Außenumfangs des Tastrings kann die Lage eines Werkzeugs, bspw. eines Fräsers, relativ zu einem Werkstück verändert werden. Tritt beispielsweise abnützungsbedingter Werkzeugverschleiß auf, wodurch sich der Arbeitsdurchmesser des Fräsers verringert, kann eine Anpassung derart erfolgen, dass der Tastringdurchmesser verringert wird. Der Fräser wird dadurch näher an die Werkstückoberfläche des zu bearbeitenden Werkstücks herangeführt. Ein Austausch der Tasteinrichtung oder des Tastrings ist somit nicht erforderlich, und andernfalls erforderliche Nebenzeiten zum Austausch dieser Elemente werden vermieden.

Erfindungsgemäß weist der Tastring ferner eine in Umfangsrichtung verlaufende Tastfläche sowie radial innen (und/oder innerhalb der Tastfläche) angeordnete Vorsprünge auf, welche Vorsprünge keilförmig ausgebildet sind. Somit können die Vorsprünge des Tastrings an den Stützelementen anliegen, und bei einer Relativbewegung zwischen dem ersten und zweiten Stützelement findet insbesondere bei einer weiteren Dehnung des Tastrings eine Kraftübertragung über die keilförmig ausgebildeten Vorsprünge statt. Wird hingegen der Abstand zwischen den Stützelementen vergrößert, sorgen die keilförmigen Vorsprünge bei der Kontraktion des Tastrings für eine sichere Anlage des Tastrings an den Stützelementen.

Bevorzugt ist der Tastring aus einem elastischen Kunststoff, insbesondere Polyoxymethylen, gefertigt. Somit kann der Außenumfang des dehnbaren Tastrings verändert werden, gleichzeitig wird jedoch vermieden, dass Kratzer am zu tastenden Werkstück entstehen. Beispielsweise kann mit dem Tastring eine Durchmesseränderung von 0,6mm erreicht werden. In einer Ausführungsform ist der Tastring vorgespannt an der Tasteinrichtung angebracht. Dies wird beispielsweise dadurch erreicht, dass bei der Montage des Tastrings das erste Stützelement und das zweite Stützelement relativ zueinander bewegt werden. Der auf diese Weise vorgedehnte Tastring befindet sich damit in einer Grundposition.

Somit werden ungleichmäßige Verformungsgrade bei einer anfänglichen Dehnung aus dem Grundzustand bereits vorweggenommen und die damit verbundenen Einflüsse vermieden. Auch haben Kunststoffe ggf. die Eigenschaft, dass diese aus einem gedehnten Zustand nicht zeitnah in den Grundzustand zurückkehren, und beispielsweise gerade der letzte Teil der Kontraktion deutlich mehr Zeit erfordert. Durch die Vorspannung des Tastrings werden derartige Phänomene im Betrieb der Tasteinrichtung vermieden.

Ferner kann ein Verstellelement entlang der Mittenachse des ersten und zweiten Stützelements vorgesehen sein, und eine Bewegung, insbesondere eine Drehbewegung, des Verstellelements bewirkt eine Relativbewegung zwischen dem ersten Stützelement und dem zweiten Stützelement. Somit wird eine kompakte und einfach zu betätigende Bauweise bereitgestellt. Dabei kann das zweite Stützelement bewegbar sein, und bspw. durch das zuvor genannte Verstellelement betätigt werden.

Bevorzugt sind die Vorsprünge durch Ausnehmungen getrennt, die in gleichmäßigen Abständen vorgesehen sind. Somit wird eine gleichmäßige Dehnung und Abstützung des Tastrings gewährleistet.

Dabei können die Ausnehmungen durch T-förmige Schlitze ausgebildet sein, und/oder die Ausnehmungen haben einen Radius an deren Basisabschnitt. Bei der Herstellung können die Ausnehmungen durch einen Schaftfräser oder Wasserstrahlschneiden eingebracht werden. Insbesondere die Verwendung eines Schaftfräsers bei der Herstellung des Tastrings führt zu geringen Herstellungskosten.

Die Anzahl kann bei der Herstellung des Tastrings an den konkreten Anwendungsfall angepasst werden.

Die zuvor genannte Nut ist im Querschnitt insbesondere v-förmig ausgebildet, so dass der Tastring sicher aufgenommen werden kann.

Weiter bevorzugt sind das erste Stützelement und das zweite Stützelement spiegelsymmetrisch angeordnet, wodurch eine gleichmäßige Abstützung gewährleistet wird.

In einer bevorzugten Ausführungsform ist an zumindest einem der Stützelemente eine Führung angebracht oder integral mit diesem ausgebildet, insbesondere ein zylindrischer Stift. Entlang dieser Führung kann das jeweils andere Stützelement bei der Montage der Tasteinrichtung ausgerichtet werden, und bei einer relativen Verstellbewegung zwischen den Stützelementen geführt werden.

In einer bevorzugten Ausführungsform ist die Tasteinrichtung mit einem Bearbeitungswerkzeug, insbesondere Fräser, kombiniert, wobei das erste Stützelement und das zweite Stützelement durch eine gemeinsame Welle getragen werden. Das Werkzeug wiederum wird bevorzugt durch eine Hohlwelle getragen, die konzentrisch zur Welle des ersten und zweiten Stützelements angeordnet ist. Die Lagerung der Hohlwelle für das Bearbeitungswerkzeug führt dazu, dass die Welle der Stützelemente nicht mit angetrieben wird.

Dabei führt die Anordnung, bei der das erste Stützelement und das zweite Stützelement durch eine gemeinsame Welle getragen werden, zu einer besonders hohen Systemsteifigkeit und hoher Genauigkeit im Konturfolgeverhalten. Außerdem ist es bei der bevorzugten Anordnung des Bearbeitungswerkzeugs an einer Hohlwelle bei einem Werkzeugwechsel nicht notwendig, die relative Lage zwischen dem Tastring und dem neuen Werkzeug einzustellen.

### Kurze Beschreibung der Zeichnungen

- Figur 1: zeigt eine Seitenschnittansicht einer Ausführungsform der erfindungsgemäßen Tasteinrichtung;
- Figur 2: zeigt eine Draufsicht des Tastrings, der bei der in Figur 1 dargestellten Tasteinrichtung eingesetzt wird;
- Figur 3: ist eine perspektivische Ansicht des in Figur 2 dargestellten Tastrings;
- Figur 4: ist eine perspektivische Ansicht einer Modifikation des in Figur 3 dargestellten Tastrings.

### Detaillierte Beschreibung der bevorzugten Ausführungsformen

Nachfolgend wird anhand der begleitenden Zeichnungen eine bevorzugte Ausführungsform der vorliegenden Erfindung im Detail beschrieben. Weitere in diesem Zusammenhang genannte Modifikationen bestimmter Einzelmerkmale können jeweils einzeln miteinander kombiniert werden, um neue Ausführungsformen auszubilden.

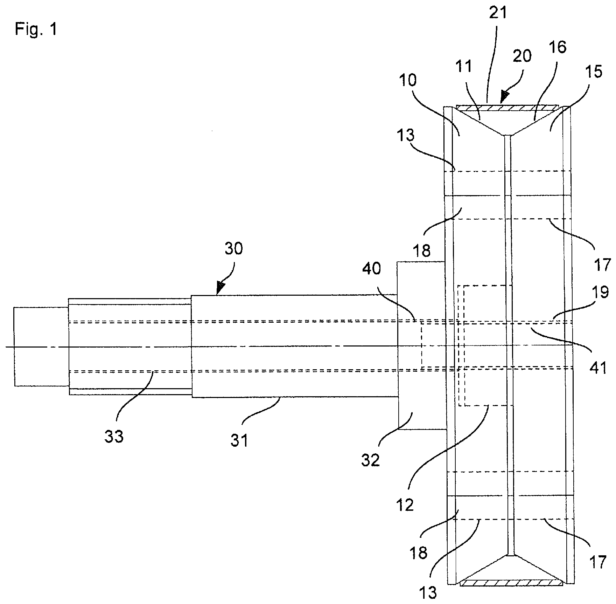

Figur 1 zeigt eine Seitenschnittansicht einer Ausführungsform der erfindungsgemäßen Tasteinrichtung. Insbesondere umfasst die Tasteinrichtung ein erstes Stützelement 10 sowie ein zweites Stützelement 15, die an einer gemeinsamen Welle 30 befestigt sind und einen Tastring 20 aufnehmen. Die Welle 30 sowie die Stützelemente 10, 15 sind aus einem metallischen Werkstoff gefertigt, während der Tastring 20 aus Kunststoff (POM) hergestellt ist. Der Tastring 20 kommt bei Verwendung der Tasteinrichtung mit einem Werkstück in Kontakt, und der verwendete Kunststoff verhindert ein Verkratzen der mit dem Tastring 20 in Kontakt kommenden Werkstückoberfläche.

Die Welle 30 umfasst einen Werkzeugaufnahmebereich 31, an dessen Umfang ein Werkzeug, wie ein Fräser, aufgenommen wird, sowie einen in axialer Richtung benachbart zum Werkzeugaufnahmebereich 31 vorgesehenen Anschlag 32, welcher Anschlag 32 einen größeren Durchmesser aufweist als der Werkzeugaufnahmebereich 31. Benachbart zum Anschlag 32 an der dem Werkzeugaufnahmebereich 31 gegenüberliegenden Seite werden das erste Stützelement 10 und das zweite Stützelement 15 wie nachfolgend erläutert befestigt.

Das erste Stützelement 10 hat eine Außenfläche 11, die zur Mittenachse des ersten Stützelements 10 geneigt ist. Somit hat das erste Stützelement 10 zumindest abschnittsweise eine konische Gestalt. Um die Mittenachse des ersten Stützelements 10 ist eine zylindrische Ausnehmung 12 vorgesehen, in der eine Befestigungsschraube 40 aufgenommen wird. Die Befestigungsschraube 40 dringt bei der Befestigung des ersten Stützelements 10 an der Welle 30 in eine in der Welle 30 vorgesehene Gewindebohrung 33 ein, so dass das erste Stützelement 10 beim Anziehen der Befestigungsschraube 40 gegen den Anschlag 32 gedrückt wird.

Benachbart zum ersten Stützelement 10 ist das zweite Stützelement 15 vorgesehen, das ebenfalls eine geneigte Außenfläche 16 aufweist. Somit hat das zweite Stützelement 15 ebenfalls zumindest abschnittsweise eine konische Gestalt. Dabei wird das zweite Stützelement 15 derart angeordnet und montiert, dass die geneigte Außenfläche 16 - in der Seitenansicht betrachtet - spiegelbildlich zur geneigten Außenfläche 11 des ersten Stützelements 10 angeordnet ist.

Das erste Stützelement 10 umfasst zwei Öffnungen 13, und das zweite Stützelement 15 umfasst zwei Öffnungen 17, wobei in die Öffnungen 13 jeweils ein zylindrischer Stift 18 eingepresst ist, die bei Anbringung des zweiten Stützelements 15 am ersten Stützelement 10 in die Öffnungen 17 des zweiten Stützelements 15 eindringen. Auf diese Weise werden das erste Stützelement 10 und das zweite Stützelement 15 relativ zueinander ausgerichtet, und das zweite Stützelement 15 kann bei einer relativen Bewegung bezüglich des ersten Stützelements 10 geführt werden.

Zur Befestigung des zweiten Stützelements 15 an der Welle 30 ist ein Verstellelement 41 vorgesehen, das durch eine mittige Durchgangsöffnung 19 des zweiten Stützelements 15 dringt und in ein Gewinde eingeschraubt wird, welches Gewinde in der mit der Welle 30 verbundenen Befestigungsschraube 40 vorgesehen ist. Somit kann durch Bewegen des Verstellelements 41 ein Abstand zwischen dem ersten Stützelement 10 in den zweiten Stützelement 15 verändert werden.

Die geneigte Außenfläche 11 des ersten Stützelements 10 sowie die Außenfläche 16 des zweiten Stützelements 15 bilden zusammen eine v-förmige Nut. Im Bereich dieser Nut wird der Tastring 20 abgestützt, der am ersten Stützelement 10 am zweiten Stützelement 15 umlaufend vorgesehen ist.

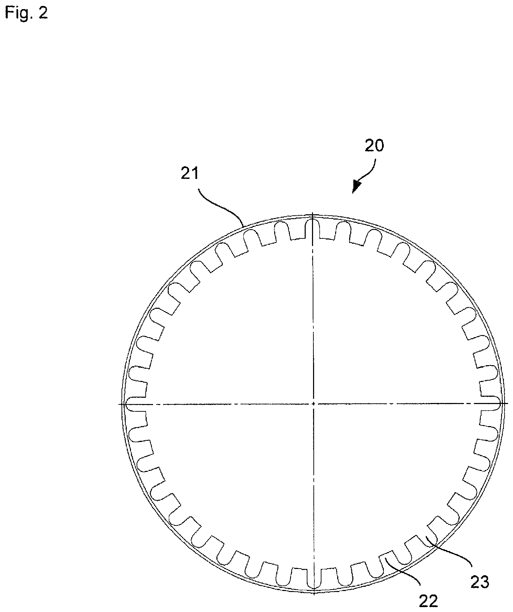

Figur 2 zeigt eine Draufsicht auf eine Ausführungsform des ringförmigen Tastrings 20. Der Tastring 20 umfasst eine Lauffläche 21, die mit einem Werkstück in Kontakt kommt sowie radial nach innen weisende Vorsprünge 22, die in der vorliegenden Ausführungsform in gleichen Abständen angeordnet sind. Dabei werden die Vorsprünge 22 durch Ausnehmungen 23 voneinander getrennt, die bei der Herstellung des Tastrings 20 mit einem Schaftfräser eingebracht werden.

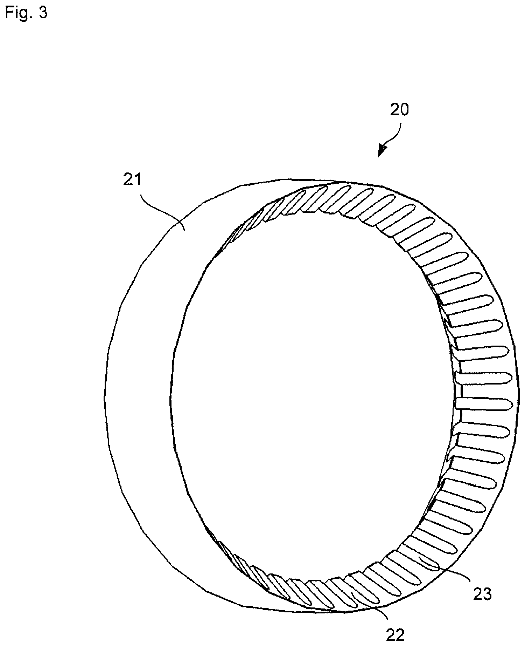

Wie in Figur 3 der vorliegenden Anmeldung dargestellt, sind die Vorsprünge 22 des Tastrings 20 keilförmig ausgebildet. Mit anderen Worten weisen die Vorsprünge Seitenflächen auf, die in Tiefenrichtung (Axialrichtung) des Tastrings 20 geneigt sind und mittig eine Kante ausbilden. Durch die keilförmige Ausgestaltung der Vorsprünge 22 sind diese an die zwischen der geneigten Außenfläche 11 des ersten Stützelements 10 und der geneigten Außenfläche 16 des zweiten Stützelements 15 ausgebildete v-förmige Nut angepasst.

Wird das Verstellelement 41 betätigt und somit das zweite Stützelement 15 in Richtung des ersten Stützelements 10 bewegt, verkleinert sich die zwischen der Außenfläche 11 des ersten Stützelements 10 und der Außenfläche 16 des zweiten Stützelements 15 ausgebildete Nut. Somit wird der Tastring 20 in radialer Richtung nach außen gedrückt und der Durchmesser des Tastrings 20 damit verändert.

Nachdem der Tastring 20 eine Vielzahl von Ausnehmungen 23 zwischen den mit den Außenflächen 11, 16 in Kontakt stehenden Vorsprüngen 22 aufweist, kann eine gleichmäßige Veränderung des Umfangs der Lauffläche 21 des Tastrings 20 gewährleistet werden.

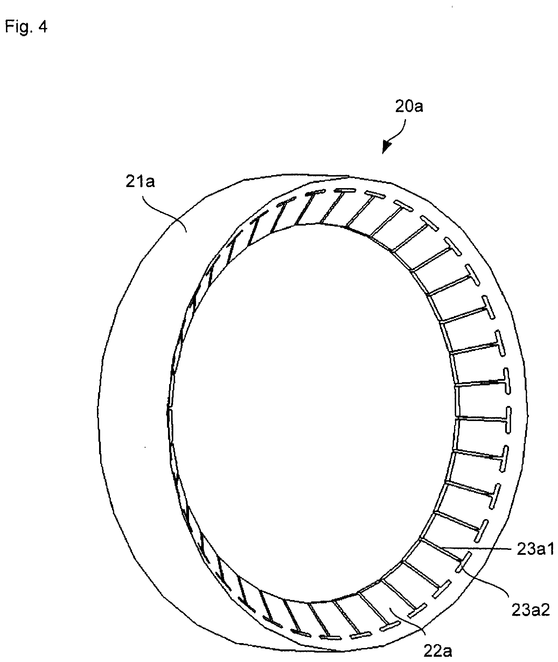

In Figur 4 ist eine Modifikation des in Figur 3 dargestellten Tastrings 20 abgebildet. Der Tastrings 20a umfasst eine Lauffläche 21a, die als Kontaktbereich zur Fläche eines Werkstücks dient. Ferner sind radial innerhalb der Tastfläche 21a Vorsprünge 22a vorgesehen, die in der Tiefenrichtung des Tastrings 20a betrachtet eine keilförmige Gestalt ausbilden. Die Vorsprünge 22a werden jeweils durch Schlitze 23a1 voneinander getrennt, welche erste Schlitze 23a1 in radialer Richtung des Tastrings 20 verlaufen. Die ersten Schlitze 23a1 enden in zweiten Schlitzen 23a2, die in Umfangsrichtung im Tastring 20a vorgesehen sind. Mit anderen Worten bilden die Schlitze 23a1, 23a2 eine T-förmige Gestalt aus.

Der Tastring 20, 20a gemäß den vorliegenden Ausführungsformen ist aus Kunststoff gefertigt. Der zur Rede stehende Kunststoff hat die Eigenschaft, dass dieser von einem Ausgangszustand gedehnt werden kann, es jedoch mehrere Stunden benötigt, bis der Tastring 20 vom gespreizten Zustand wieder in die ursprüngliche Form zurückkehrt. Allerdings findet diese Rückkehr in den Ausgangszustand nicht kontinuierlich statt, sondern lediglich ein geringer, abschließender Teil der Spreizung erfordert mehrere Stunden. Aus diesem Grund wird der Tastrings 20 auf das erste Stützelement 10 und das zweite Stützelement 15 montiert, und vor dem Einsatz der Tasteinrichtung durch eine Relativbewegung zwischen dem ersten und zweiten Stützelement vorgespannt. Somit erreicht der Tastring in einer Grundposition eine gewisse Vorspannung bzw. Grunddehnung, und wird bei Vergrößerung des Durchmessers des Tastrings 20 bereits aus einem vorgespannten Zustand verstellt.

Obwohl in den zuvor beschriebenen Ausführungsformen lediglich das zweite Stützelement 15 beweglich ausgestaltet ist, kann es gemäß einer Modifikation vorliegenden Ausführungsformen vorgesehen sein, dass beide Stützelemente 10, 15 beweglich ausgebildet sind.

Die Verstellbewegung erfolgt in der zuvor beschriebenen Ausführungsform manuell, indem das Verstellelement 41, beispielsweise eine Schraube, bewegt wird. Allerdings ist es gemäß einer Variante der beschriebenen Ausführungsform möglich, eine motorgetriebene Verstellung vorzusehen.

Die Verstellung kann dabei kraftgesteuert oder weggesteuert erfolgen. Als kraftgesteuerte Lösung ist beispielsweise eine hydraulische Verstellung möglich. Als Beispiel für eine weggesteuerte Lösung ist ein Gewindetrieb oder ein Keilgetriebe zu nennen.

Obwohl im Rahmen der beschriebenen Ausführungsform der Tastring 20 aus einem elastischen Kunststoffmaterial, bevorzugt POM (Polyoxymethylen), gefertigt ist, kann es im Rahmen weiterer Ausführungsformen vorgesehen sein, den Tastring aus einem anderen dehnbaren Material auszubilden. Beispielsweise kann es sich um einen Metallring handeln. Auch kann der Ring aus einem Metall-, Kunststoff- oder Textilgewebe oder einer Kombination hieraus zusammengesetzt sein.

## Patentansprüche

1. Tasteinrichtung für eine Bearbeitungsmaschine zur Bearbeitung von bevorzugt plattenförmigen Werkstücken, die bevorzugt zumindest abschnittsweise aus Holz, Holzwerkstoffen, Kunststoff oder dergleichen bestehen, aufweisend:
ein erstes Stützelement (10), das eine konische Außenfläche (11) aufweist, an welcher Außenfläche (11) zumindest abschnittsweise ein dehnbarer Tastring (20, 20a) anliegt,
wobei ferner ein zweites Stützelement (15) mit einer konischen Außenfläche (16) benachbart zum ersten Stützelement (10) derart angeordnet ist, dass die konische Außenfläche (16) des zweiten Stützelements (15) und die konische Außenfläche (11) des ersten Stützelements (10) eine Nut ausbilden, in welcher Nut der Tastring (20, 20a) aufgenommen wird,
wobei das erste Stützelement (10) und das zweite Stützelement (15) relativ zueinander bewegbar sind,
**dadurch gekennzeichnet, dass**
der Tastring (20, 20a) eine in Umfangsrichtung verlaufende Tastfläche (21, 21a) sowie radial innen angeordnete Vorsprünge (22, 22a) aufweist, welche Vorsprünge (22, 22a) keilförmig ausgebildet sind.

2. Tasteinrichtung gemäß Anspruch 1, bei der der Tastring (20, 20a) aus einem elastischen Kunststoff, insbesondere Polyoxymethylen, gefertigt ist.

3. Tasteinrichtung gemäß einem der vorangegangenen Ansprüche, bei der der Tastring (20, 20a) vorgespannt an der Tasteinrichtung angebracht ist.

4. Tasteinrichtung gemäß einem der vorangegangenen Ansprüche, bei der ein Verstellelement (41) entlang der Mittenachse des ersten und zweiten Stützelements (10, 15) vorgesehen ist, und eine Bewegung, insbesondere eine Drehbewegung, des Verstellelements (41) eine Relativbewegung zwischen dem ersten Stützelement (10) und dem zweiten Stützelement (15) bewirkt.

5. Tasteinrichtung gemäß einem der vorangegangenen Ansprüche, bei der das zweite Stützelement (15) bewegbar ist.

6. Tasteinrichtung gemäß Anspruch 1, bei der die Vorsprünge durch Ausnehmungen (23; 23a1, 23a2) getrennt sind, die in gleichmäßigen Abstanden vorgesehen sind.

7. Tasteinrichtung gemäß Anspruch 6, bei der die Ausnehmungen durch T-förmige Schlitze (23a1, 23a2) ausgebildet sind.

8. Tasteinrichtung gemäß Anspruch 6, bei der die Ausnehmungen (23; 23a1, 23a2) einen Radius an deren Basisabschnitt aufweisen.

9. Tasteinrichtung gemäß einem der vorangegangenen Ansprüche, bei der die Nut einen v-förmigen Querschnitt aufweist.

10. Tasteinrichtung gemäß einem der vorangegangenen Ansprüche, bei der das erste Stützelement (10) und das zweite Stützelement (15) spiegelsymmetrisch angeordnet sind.

11. Tasteinrichtung gemäß einem der vorangegangenen Ansprüche, bei der eine Verdrehsicherung für die Stützelemente vorgesehen ist, bevorzugt an zumindest einem der Stützelemente (10, 15) eine Führung (18) angebracht oder integral mit diesem ausgebildet ist, insbesondere ein zylindrischer Stift.

12. Tasteinrichtung gemäß einem der vorangegangenen Ansprüche mit einem Bearbeitungswerkzeug, insbesondere Fräser, wobei das erste Stützelement (10) und das zweite Stützelement (15) durch eine gemeinsame Welle (30) getragen werden, und das Bearbeitungswerkzeug bevorzugt an einer Hohlwelle angeordnet ist.

13. Tasteinrichtung gemäß Anspruch 12, bei der die Welle (30) einen Anschlag (32) aufweist, gegen welchen Anschlag (32) das erste Stützelement (10) befestigt wird.

## Claims

1. Sensor device for a processing machine for processing of preferably plate-shaped work pieces, which are preferably at least in part made of wood, composite wood materials, plastic or similar, comprising:
a first support element (10) which comprises a conical exterior surface (11), on which exterior surface (11) lies at least in part a flexible sensor ring (20, 20a)
wherein further a second support element (15) with a conical exterior surface (16) is arranged adjacent to the first support element (10), such that the conical exterior surface (16) of the second support element (15) and the conical exterior surface (11) of the first support element (10) form a groove, in which groove the sensor ring (20, 20a) is received,
wherein the first support element (10) and the second support element (15) are moveable relatively to each other,
**characterised in that**
the sensor ring (20, 20a) comprises a sensor surface (21, 21a) running in a peripheral direction and radially inwardly arranged protrusions (22, 22a), said protrusions (22, 22a) being wedge-shaped.

2. Sensor device according to claim 1, in which the sensor ring (20, 20a) is made from an elastic plastic, in particular from polyoxymethylene.

3. Sensor device according to any one of the preceding claims, in which the sensor ring (20, 20a) is mounted pre-tensioned on the sensor device.

4. Sensor device according to any one of the preceding claims, in which an adjustment element (41) is provided along the central axis of the first and second support elements (10, 15) and a motion, in particular a rotational motion, of the adjustment element (41) effects a relative motion between the first support element (10) and the second support element (15).

5. Sensor device according to any one of the preceding claims, in which the second support element (15) is moveable.

6. Sensor device according to claim 1, in which the protrusions are separated by recesses (23; 23a1, 23a2) which are provided at even intervals.

7. Sensor device according to claim 6, in which the recesses are formed in T-shaped slits (23a1, 23a2).

8. Sensor device according to claim 6, in which the recesses (23; 23a1, 23a2) comprise a radius on their base section.

9. Sensor device according to any one of the preceding claims, in which the groove comprises a v-shaped cross-section.

10. Sensor device according to any one of the preceding claims, in which the first support element (10) and the second support element (15) are arranged in mirror symmetry.

11. Sensor device according to any one of the preceding claims, in which an rotation lock device for the support elements is provided, preferably on at least one of the support elements (10, 15) a guide (18) is mounted on or formed integrally with said support element, in particular a cylindrical pin.

12. Sensor device according to any one of the preceding claims with a processing tool, in particular a milling cutter, wherein the first support element (10) and the second support element (15) are borne on a shared shaft (30) and the processing tool is preferably arranged on a hollow shaft.

13. Sensor device according to claim 12, in which the shaft (30) comprises a stop (32), against which stop (32) the first support element (10) is attached.

## Revendications

1. Dispositif palpeur pour une machine d'usinage destinée à l'usinage de pièces de préférence en forme de plaques, qui sont de préférence au moins par sections en bois, en dérivés de bois, en matière plastique ou similaires, comportant :
un premier élément d'appui (10) qui présente une surface extérieure conique (11), un anneau palpeur extensible (20, 20a) s'appliquant au moins par sections sur ladite surface extérieure (11),
dans lequel en outre un deuxième élément d'appui (15) avec une surface extérieure conique (16) est agencé au voisinage du premier élément d'appui (10) de telle sorte que la surface extérieure conique (16) du deuxième élément d'appui (15) et la surface extérieure conique (11) du premier élément d'appui (10) forment une rainure dans laquelle l'anneau palpeur (20, 20a) est logé,
dans lequel le premier élément d'appui (10) et le deuxième élément d'appui (15) sont mobiles l'un par rapport à l'autre,
**caractérisé en ce que** :
l'anneau palpeur (20, 20a) comporte une surface de palpation (21, 21a) s'étendant dans la direction circonférentielle ainsi que des saillies (22, 22a) agencées radialement à l'intérieur, lesquelles saillies (22, 22a) sont réalisées en forme de coins.

2. Dispositif palpeur selon la revendication 1, dans lequel l'anneau palpeur (20, 20a) est formé d'une matière plastique élastique, en particulier du polyoxyméthylène.

3. Dispositif palpeur selon l'une des revendications précédentes, dans lequel l'anneau palpeur (20, 20a) est agencé, précontraint, sur le dispositif palpeur.

4. Dispositif palpeur selon l'une des revendications précédentes, dans lequel un élément de réglage (41) est prévu le long de l'axe médian du premier et du deuxième élément d'appui (10, 15) et dans lequel un mouvement, en particulier un mouvement de rotation, de l'élément de réglage (41) provoque un déplacement relatif entre le premier élément d'appui (10) et le deuxième élément d'appui (15).

5. Dispositif palpeur selon l'une des revendications précédentes, dans lequel le deuxième élément d'appui (15) est mobile.

6. Dispositif palpeur selon la revendication 1, dans lequel les saillies sont séparées par des évidements (23 ; 23a1, 23a2) qui sont prévus à intervalles réguliers.

7. Dispositif palpeur selon la revendication 6, dans lequel les évidements sont formés par des fentes en forme de T (23a1, 23a2).

8. Dispositif palpeur selon la revendication 6, dans lequel les évidements (23 ; 23a1, 23a2) ont un rayon sur leur section de base.

9. Dispositif palpeur selon l'une quelconque des revendications précédentes, dans lequel la rainure a une section transversale en forme de V.

10. Dispositif palpeur selon l'une quelconque des revendications précédentes, dans lequel le premier élément d'appui (10) et le deuxième élément d'appui (15) sont agencés symétriquement.

11. Dispositif palpeur selon l'une quelconque des revendications précédentes, dans lequel une sécurité contre la torsion est prévue pour les éléments d'appui, un guide (18), en particulier une tige cylindrique, étant de préférence agencé(e) sur au moins l'un des éléments d'appui (10, 15) ou réalisé(e) d'un seul tenant avec celui-ci.

12. Dispositif palpeur selon l'une quelconque des revendications précédentes avec un outil d'usinage, en particulier une fraise, dans lequel le premier élément d'appui (10) et le deuxième élément d'appui (15) sont portés par un arbre commun (30) et dans lequel l'outil d'usinage est agencé de préférence sur un arbre creux.

13. Dispositif palpeur selon la revendication 12, dans lequel l'arbre (30) comporte une butée (32), butée (32) contre laquelle le premier élément d'appui (10) est fixé.
